(19) Europäisches Patentamt / European Patent Office / Office européen des brevets

(11) **EP 3 877 343 B1**

(12) **EUROPEAN PATENT SPECIFICATION**

(45) Date of publication and mention
of the grant of the patent:
**14.06.2023 Bulletin 2023/24**

(21) Application number: **19797745.7**

(22) Date of filing: **06.11.2019**

(51) International Patent Classification (IPC):
**C03C 3/087** *(2006.01)*      **C03C 3/097** *(2006.01)*
**C03C 4/02** *(2006.01)*      **C03C 10/00** *(2006.01)*

(52) Cooperative Patent Classification (CPC):
**C03C 3/097; C03C 3/087; C03C 4/02;**
**C03C 10/0054**

(86) International application number:
**PCT/EP2019/080433**

(87) International publication number:
**WO 2020/094734 (14.05.2020 Gazette 2020/20)**

(54) **TRANSPARENT BETA-QUARTZ GLASS-CERAMICS WITH A LOW LITHIUM CONTENT**

TRANSPARENTE BETA-QUARZGLASKERAMIKEN MIT NIEDRIGEM LITHIUMGEHALT

VITROCÉRAMIQUES TRANSPARENTES AU BÊTA-QUARTZ À FAIBLE TENEUR EN LITHIUM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.11.2018 FR 1860378**

(43) Date of publication of application:
**15.09.2021 Bulletin 2021/37**

(73) Proprietor: **EUROKERA**
**77640 Jouarre (FR)**

(72) Inventors:
• **FEVRE, Tiphaine**
**75013 Paris (FR)**
• **COMTE, Marie**
**92260 FONTENAY AUX ROSES (FR)**
• **LEHUEDE, Philippe**
**77190 DAMMARIE-LES-LYS (FR)**

(74) Representative: **Cabinet Beau de Loménie**
**158, rue de l'Université**
**75340 Paris Cedex 07 (FR)**

(56) References cited:
**EP-A1- 1 114 803      FR-A1- 2 668 471
FR-A1- 2 964 378      US-A1- 2013 164 509**

• **DATABASE WPI Week 200909 Thomson
Scientific, London, GB; AN 2009-E38156
XP002792479, -& JP 2009 018986 A (NIPPON
ELECTRIC GLASS CO) 29 January 2009
(2009-01-29)**

**Description**

The context of the present application is that of transparent low expansion glass-ceramics of lithium aluminosilicate (LAS) type containing a solid solution of β-quartz as the main crystalline phase. The present application relates more particularly to:

· transparent glass-ceramics of lithium aluminosilicate (LAS) type containing a solid solution of β-quartz as the main crystalline phase and having a low lithium content; said glass-ceramics being materials that are entirely suited to making cooktops associated with induction heating;
· articles constituted, at least in part, of these glass-ceramics;
· lithium aluminosilicate glasses, precursors of these glass-ceramics; and
· a method of preparing these articles.

Transparent glass-ceramics - of the lithium aluminosilicate (LAS) type, containing a solid solution of β-quartz as the main crystalline phase - have been in existence for more than 20 years. They are described in numerous patent documents and in particular in patent US 5 070 045 and patent application WO 2012/156444. They are used more particularly as the material for constituting cooktops, cooking utensils, microwave oven bottoms, fireplace windows, fireplace inserts, stove windows, oven doors (in particular for pyrolytic and catalytic ovens), and fire-windows.

In order to obtain such glass-ceramics (more precisely in order to eliminate inclusions of gas in the molten mass of precursor glass), conventional fining agents, $As_2O_3$ and/or $Sb_2O_3$ have been used for a long time. In view of the toxicity of those two compounds and of the ever more severe regulations that are in force, it is desired not to make use of these (toxic) fining agents any more in fabricating the precursor glass. For environmental considerations, it is also no longer desired to use halogens, such as F and Br, which can be substituted for said conventional fining agents $As_2O_3$ and $Sb_2O_3$, at least in part. $SnO_2$ has been proposed as a substitute fining agent (see in particular the teaching of patent documents US 6 846 760, US 8 053 381, WO 2012/156444, US 9 051 209, and US 9 051 210). It is being used more and more. Nevertheless, at a similar fining temperature, it is found to be less effective than $As_2O_3$. In general manner, and thus most particularly in a context of using $SnO_2$ as a fining agent, it is advantageous to have (precursor) glasses with low viscosities at high temperature in order to facilitate fining.

The patent application US 2013/164509 A1 describes a transparent glass-ceramic of lithium aluminosilicate type containing a solid solution of β-quartz as its main crystalline phase.

Depending on the heating elements that are associated with such cooktops (radiant heating elements or induction heating elements), requirements concerning values for the (linear) coefficient of thermal expansion (CTE) of the material constituting said cooktops are more or less constraining:

· plates used with radiant heating can be raised to temperatures as high as 725°C, and in order to be able to withstand the thermal shocks and the temperature gradients that occur within them, their CTE is low, generally lying in the range $\pm 10 \times 10^{-7}$ per kelvin ($K^{-1}$), preferably in the range $\pm 3 \times 10^{-7} K^{-1}$ from 25°C to 700°C; and
· plates used with (conventional) induction heating are subjected to lower temperatures (temperatures that reach 450°C only exceptionally, and generally no more than 400°C). The thermal shocks to which they are subjected are thus less violent; the CTE of such cooktops can be higher.

There also exist plates associated with induction heating that make use of a new generation of induction heater, with infrared temperature sensors (such as pyrometers or thermopiles) aimed to control the temperature of the cooking utensils. By means of such sensors, the temperature of the plate is better controlled and does not exceed 300°C. Under such conditions, even greater CTE values can be entirely suitable. Nevertheless, it should be observed that such cooktops occupy a (narrow) top-of-range market segment.

The plates proposed in the present application are suitable for use with conventional induction heating; they withstand temperatures of 400°C, and exceptionally thermal shocks at 450°C.

For reasons of appearance, it is also desirable for plates, even when transparent, to mask the elements that are placed beneath them, such as induction coils, electric wiring, and circuits for controlling and monitoring the cooking appliance. An opacifier may be deposited on the bottom face of such a plate or the material from which it is constituted may be strongly colored. If this case, some minimum level of transmission must nevertheless be conserved so that displays can be seen, as a result of light emitted by light-emitting diodes (LEDs) placed under the plate.

Lithium is one of the main components of these glass-ceramics (of the lithium aluminosilicate (LAS) type, which are transparent and contain a solid solution of β-quartz as the main crystalline phase). At present, lithium is present in the composition of said glass-ceramics, generally at contents lying in the range 2.5% to 4.5% (see for example the teaching of patents US 9 051 209 and US 9 051 210), more generally at contents of 3.6% to 4.0%, by weight (expressed in terms of $Li_2O$). It is used essentially as an component of the solid solution of β-quartz. It makes it possible within the glass-ceramics to obtain CTE values that are low or even zero. It constitutes a particularly high performance melting agent for the precursor glass (its impact being observed most particularly on high temperature viscosity). At present, the supply of lithium is less reliable than it used to be. In any event, this element is becoming more expensive. The reason for this recent pressure on the availability and the price of lithium lies in the increasing demand for lithium for producing lithium batteries.

The prior art already described precursor glasses for glass-ceramics (of the lithium aluminosilicate (LAS) type, which are transparent and contain a solid solution of β-quartz as the main crystalline phase), together with the associated glass-ceramics, which present compositions having a greater or lesser lithium content. Thus:

· patent US 9 446 982 describes colored transparent glass-ceramics of lithium aluminosilicate (LAS) type containing a solid solution of β-quartz as the main crystalline phase and containing lithium contents (expressed in terms of $Li_2O$) that are in the range 2% to less than 3% by weight (at least 2% by weight, with reference to controlling crystallization), and magnesium contents (expressed in terms of MgO) lying in the range 1.56% to 3% by weight, with reference to the looked-for CTE value. For the glass-ceramics that are described, CTE values in the range $10\times10^{-7}K^{-1}$ to $25\times10^{-7}K^{-1}$, between ambient temperature and 700°C, are aimed, with reference to the technical problem of the compatibility of said glass-ceramics with their decoration;

· patent application US 2015/0197444 describes transparent glass-ceramics of the lithium aluminosilicate (LAS) type containing a solid solution of β-quartz as the main crystalline phase and presenting a controlled transmission curve. The compositions described are free from $As_2O_3$ and $Sb_2O_3$ and they contain tin oxide ($SnO_2$) as fining agent. They generally contain 2.5% to 4.5% by weight of $Li_2O$. The example compositions contain high contents of $Li_2O$, lying in the range 3.55% to 3.80% by weight;

· patent US 9 018 113 describes colored transparent glass-ceramics presenting transmission curves that are optimized in the visible and infrared ranges and that are suitable for use as cooktops associated with induction heating. Their composition contains 1.5 wt.% to 4.2 wt.% $Li_2O$; specifically the example compositions all contain contents of $Li_2O$ superior to 2.9 wt.%; and

· patent application DE 10 2018 110 855 describes transparent glass-ceramics having a CTE of $\pm10\times10^{-7}K^{-1}$ (from 20°C to 700°C), of composition containing 3.0 wt.% to 3.6 wt.% $Li_2O$ (preferably in the range 3.2 wt.% to 3.6 wt.% of $Li_2O$), and $V_2O_5$ or $MoO_3$ as coloring agents.

In such a context, the inventors have found it appropriate to seek glass-ceramic compositions of low lithium content (maximum content 2.9% by weight of $Li_2O$); the glass-ceramics in question, transparent, of lithium aluminosilicate (LAS) type and containing a solid solution of β-quartz as the main crystalline phase, being entirely suitable as material for making cooktops usable with induction heating (conventional induction heating; said cooktops being subjected to temperatures that reach 450°C only exceptionally, and generally no more than 400°C). It was also most desirable:

· for the precursor glasses of said glass-ceramics to present properties similar to those of precursor glasses for presently fabricated glass-ceramics so that the industrial process can be transposed easily; and
· for said precursor glasses to be capable of being colored and most particularly of developing a black color while they are being cerammed, without a level of haze appearing that impedes good visibility of the red light emitted by light-emitting diodes (LEDs) arranged under cooktops.

Specifications for the glass-ceramics in question are set out below:

- · to present a CTE lying in the range $\pm14\times10^{-7}K^{-1}$ between 25 and 450°C ($-14\times10^{-7}K^{-1} \leq CTE_{(25-450°C)} \leq +14\times10^{-7}K^{-1}$), advantageously lying in the range $\pm10\times10^{-7}K^{-1}$ ($-10\times10^{-7}K^{-1} \leq CTE_{(25-450°C)} \leq +10\times10^{-7}K^{-1}$), $CTE_{(25-450°C)}$ which is thus acceptable for use with conventional induction heating (it can be understood that said $CTE_{(25-450°C)}$ is less than or equal to $14\times10^{-7}K^{-1}$, advantageously less than or equal to $10\times10^{-7}K^{-1}$) and also, opportunely, a CTE lying in the range $\pm14\times10^{-7}K^{-1}$ between 25 and 700°C ($-14\times10^{-7}K^{-1} \leq CTE_{(25-700°C)} \leq +14\times10^{-7}K^{-1}$),

- · thus to be transparent (even if they are usually strongly colored): at the intended utilization thickness (cooktops typically have a thickness of 1 millimeter (mm) to 8 mm, more generally lying in the range 2 mm to 5 mm and often having a thickness of 4 mm), said glass-ceramics need to present integrated transmission, TL or Y (%) greater than or equal to 1% and a diffusion percentage (diffusion or haze (%)) less than 2%. By way of example, these measurements may be performed using a spectrometer having an integrating sphere. On the basis of these measurements, the integrated transmission (TL or Y (%)) in the visible range (from 380 nanometers (nm) to 780 nm) and the diffusion percentage (diffusion or haze (%)) are calculated using the standard ASTM D 1003-13 (under D65 illuminant with 2° observer); and

- · to have a precursor glass that possesses advantageous properties, indeed the same advantageous properties than those of glasses containing a higher $Li_2O$ content (prior art glass-ceramic precursors); i.e.:

+ said precursor glass must present a low liquidus temperature (< 1400°C) and a high viscosity at the liquidus (> 400 pascal seconds (Pa.s), preferably > 700 Pa.s), thereby facilitating forming; and/or, advantageously and
+ said precursor glass must possess a low viscosity at high temperature ($T_{30Pa.s} \leq 1640°C$, advantageously $\leq$ 1630°C), thereby facilitating fining.

It is also highly appropriate for said precursor glass to be capable of being transformed into glass-ceramic in a short length of time (<3 hours (hr)), preferably in a very short length of time (<1 hr), and/or, advantageously and, for said precursor glass to present electrical resistivity at a viscosity of 30 Pa.s that is less than 50 ohm-centimeters ($\Omega$.cm) (and preferably less than 20 $\Omega$.cm}. The person skilled in the art will understand (in the light of the composition set out below for the glass-ceramics of the present application) that obtaining these last two properties, which are advantageously required for the precursor glass, does not present any particular difficulty.

The inventors have established that glass-ceramics (of lithium aluminosilicate (LAS) type, containing a solid solution of $\beta$-quartz as the main crystalline phase) exist with a composition that contains a low lithium content (at most 2.9% by weight of $Li_2O$) **and** that satisfy the above specifications. Said glass-ceramics constitute the first aspect of the present application. In characteristic manner, these glass-ceramics present the following composition, expressed in percentages by weight of oxides:

· 63% to 67.5% of $SiO_2$;
· 18% to 21% of $Al_2O_3$;
· 2% to 2.9% of $Li_2O$;
· 0 to 1.5% of MgO;
· 1% to 3.2% of ZnO;
· 0 to 4% of BaO;
· 0 to 4% of SrO;
· 0 to 2% of CaO;
· 2% to 5% of $TiO_2$;
· 0 to 3% of $ZrO_2$;
· 0 to 1% of $Na_2O$;
· 0 to 1% of $K_2O$;
· 0 to 5% of $P_2O_5$;

with (0.74 MgO + 0.19 BaO + 0.29 SrO + 0.53 CaO + 0.48 $Na_2O$ + 0.32 $K_2O$) / $Li_2O$ < 0.9;

· optionally up to 2% of at least one fining agent; and
· optionally up to 2% of at least one coloring agent.

The following may be specified concerning each of the components involved (or potentially involved) at the specified contents in the composition here above specified (the extreme values of each indicated range (both main ranges and also preferred, advantageous "sub-ranges": see above and below) being included in said ranges). It should be recalled that the percentages given are percentages by weight.

· **$SiO_2$** (63%-67.5%): the content of $SiO_2$ ($\geq$63%) must be suitable for obtaining a precursor glass (for the glass-ceramic) that is sufficiently viscous to guarantee a minimum value of the liquidus viscosity. The content of $SiO_2$ is limited to 67.5%, insofar as the greater the content of $SiO_2$, the greater the high-temperature viscosity of the glass, and thus the glass is more difficult to melt. Comparative example A illustrates this limitation. In preferred manner, the $SiO_2$ content lies in the range 65% to 67% (bounds included).
. **$P_2O_5$** (0-5%): this compound is optionally present. To be effective, when present, it is generally present at at least 0.5%. As a substitute for $SiO_2$, $P_2O_5$ serves to reduce the liquidus temperature, in particular when the ZnO content is large (i.e. >2.5%). This point is illustrated by comparing Example 4 (with 2.11% $P_2O_5$) and Example 11 (no $P_2O_5$ (0.05%)). In advantageous manner, to obtain a significant effect on the liquidus temperature, $P_2O_5$, present, is present at a content lying in the range 1% to 5% (bounds included). In a very advantageous manner, $P_2O_5$, present, is present at a content lying in the range 1% to 3% (bounds included). Incidentally, it may be observed that in the absence of any added $P_2O_5$, some may be found in the composition of the glass (as an impurity in at least one of the raw materials used or in the cullet of glass and/or glass-ceramic used) in trace form, generally at a maximum content of 1000 parts per million (ppm) (0.1 %).
· **$Al_2O_3$** (18%-21%): the presence of ZnO in the quantities specified (quite large) makes controlling the content of

$Al_2O_3$ critical in order to limit devitrification phenomena. Excessive quantities of $Al_2O_3$ (>21%) make the composition more likely to devitrify (into mullite crystals or other crystals), which is not desirable. Conversely, quantities of $Al_2O_2$ that are too small (<18%) are unfavorable to nucleation and to the formation of small β-quartz crystals. An $Al_2O_3$ content in the range 18% to 20% (bounds included) is advantageous.

· **$Li_2O$** (2%-2.9%): the inventors have shown that it is possible to obtain glass-ceramics satisfying the requirements of the above specifications while limiting the content of $Li_2O$ to 2.9% (and thus substantially limiting said content). Said content is advantageously no more than 2.85%, said content is very advantageously no more than 2.80%. A minimum content of 2% is nevertheless necessary in order to be able to retain satisfactory devitrification and CTE characteristics. That is why it is necessary to satisfy the condition: (0.74 MgO + 0.19 BaO + 0.29 SrO + 0.53 CaO + 0.48 $Na_2O$ + 0.32 $K_2O$) / $Li_2O$ < 0.9. This condition is illustrated in comparative example E.

The minimum content is advantageously 2.2%. Thus a $Li_2O$ content in the range 2.2% to 2.85% (bounds included) is preferred; a $Li_2O$ content in the range 2.2% to 2.80% (bounds included) is most particularly preferred.

· **MgO** (0-1.5%) and **ZnO** (1%-3.2%): the inventors have obtained the looked-for results by making use, at the specified quantities, of ZnO and also optionally of MgO, as partial substitute(s) for $Li_2O$ (present in the range 2% to 2.9%).

· **MgO** (0-1.5%): this compound is optionally present. In order to be effective, when present, it is generally present at at least 0.1%. This compound decreases high-temperature viscosity of the precursor glass. It forms part of the solid solution of β-quartz. It has less impact on devitrification than ZnO (see below) but it greatly increases the CTE of the glass-ceramic (as shown in comparative example C). That is why its content, when present, is limited to 1.5%. When present, it is advantageously present in the range 0.1% to 1.4%, in particular in the range 0.1% to 1.37%, more particularly in the range 0.1% to 1.35%, still more particularly in the range 0.1% to 1.3%. In any event the following condition needs to be satisfied: (0.74 MgO + 0.19 BaO + 0.29 SrO + 0.53 CaO + 0.48 $Na_2O$ + 0.32 $K_2O$) / $Li_2O$ < 0.9.

· **ZnO** (1%-3.2%): this compound also serves to diminish the high-temperature viscosity of the precursor glass and it also forms part of the solid solution of β-quartz. Compared with $Li_2O$, it increases the CTE of the glass-ceramic, but does so in moderate manner, which makes it possible to obtain glass-ceramics having CTEs less than $14 \times 10^{-7} K^{-1}$ between 25 and 450°C. When present in too great a quantity, it leads to unacceptable devitrification (as illustrated in comparative example D). Advantageously, it is present in the range 1% to 3%. In the absence of $P_2O_5$, its content lies preferably in the range 1% to 2.5% (see above).

· **$TiO_2$** (2%-5%) and **$ZrO_2$** (0-3%): $ZrO_2$ is advantageously present (but not necessarily). With reference to effectiveness, it should generally be present at at least 0.1%. These compounds, $TiO_2$ and $ZrO_2$ enable the precursor glass to nucleate and enable a transparent glass-ceramic to be formed. The combined presence of these two compounds enables nucleation to be optimized. Too great a content of $TiO_2$ makes it difficult to obtain a glass-ceramics that is transparent. $TiO_2$ is advantageously present at a content lying in the range 2% to 4% (bounds included), and very advantageously it is present at a content lying in the range 2% to 3% (bounds included). Too great a content of $ZrO_2$ leads to unacceptable devitification. $ZrO_2$ is advantageously present at a content lying in the range 0 to 1.5% (bounds included), very advantageously it is present at a content lying in the range 1% to 1.5% (bounds included).

· **BaO** (0-4%), **SrO** (0-4%), **CaO** (0-2%), **$Na_2O$** (0-1%), and **$K_2O$** (0-1%): these compounds are optionally present. To be effective, each of them, when present, is generally present at at least 1000 ppm (0.1 %). These compounds remain in the vitreous phase of the glass-ceramic. They reduce the high-temperature viscosity of the precursor glass, they facilitate dissolution of $ZrO_2$ (when present), and they limit devitrification into mullite, but they increase the CTE of glass-ceramics. That is why the following condition needs to be satisfied:

$$(0.74 \ MgO + 0.19 \ BaO + 0.29 \ SrO + 0.53 \ CaO + 0.48 \ Na_2O + 0.32 \ K_2O) \ / \ Li_2O < 0.9.$$

It may be observed that SrO is generally not present in the form of added raw material. In such a context (no SrO present as added raw material), if SrO is present, it is present only as inevitable traces (<100 ppm), brought in as impurity with at least one of the raw materials used or within the cullet of glass and/or glass-ceramic used.

. **Fining agent(s):** the composition of the glass-ceramics of the present application advantageously includes at least one fining agent such as $As_2O_3$, $Sb_2O_3$, $SnO_2$, $CeO_2$, a chloride, a fluoride, or a mixture thereof. Said at least one fining agent is present in an effective quantity (for performing chemical fining), which conventionally does not exceed 2% by weight. It is thus generally present in the range 0.05% to 2% by weight.

In preferred manner, for environmental reasons, fining is performed by using $SnO_2$, generally with 0.05% to 0.6% by weight of $SnO_2$, and more particularly with 0.15% to 0.4% by weight of $SnO_2$. Under such circumstances, the compositions of the glass-ceramics of the present application contain neither $As_2O_3$ nor $Sb_2O_3$, or they contain only inevitable traces of at least one of these toxic compounds ($As_2O_3$ + $Sb_2O_3$ < 1000 ppm). If traces of at least one of these compounds are present, they are present as contamination; by way of example, this may be due to the presence of recycled materials of the cullet type (derived from old glasses or glass-ceramics refined with these compounds) in the charge of vitrifiable raw materials. Under such circumstances, the presence of at least one other fining agent, such as $CeO_2$, a chloride, and/or a fluoride is not excluded, but $SnO_2$ is preferably used as the only fining agent.

It should be observed that the absence of an effective quantity of chemical fining agent(s), or indeed the absence of any chemical fining agent, is not completely to be excluded; fining can then be performed thermally. This non-excluded variant is nevertheless not preferred in any way.

· **Coloring agent(s):** the composition of the glass-ceramics advantageously includes at least one coloring agent. In the context of cooktops, it is appropriate to mask elements that are arranged under said cooktop. Said at least one coloring agent is present in an effective quantity (generally at least 0.01% by weight); it is conventionally present at at most 2% by weight, or indeed at most 1% by weight. Said at least one coloring agent is conventionally selected from oxides of transition elements ($V_2O_5$, CoO, $Cr_2O_3$, $Fe_2O_3$ (see below), NiO, ...) and of rare earths ($Nd_2O_3$, $Er_2O_3$, ...). In preferred manner, vanadium oxide $V_2O_5$ is used since said vanadium oxide leads to a low absorption (in particular in infra-red range) of the precursor glass, which is advantageous for melting. The absorption it makes possible is generated during the ceramming treatment (during which it is partially reduced). It is particularly advantageous to combine $V_2O_5$ with other coloring agents such as $Cr_2O_3$, CoO, or $Fe_2O_3$ (see below), since that enables transmission to be modulated. With reference to the requirements set out below (formulated for the utilization thickness, typically in the range 1 mm to 8 mm, more generally in the range 2 mm to 5 mm, and often 4 mm):

- · having integrated transmission (TL) less than 10%, advantageously less than 4%, very advantageously less than 2,1%;
- · while maintaining transmission:

  + at 625 nm ($T_{625nm}$) greater than 1%, thus making it possible to pass light from an LED emitting red light and placed under the cooktop for display purposes;
  + at 950 nm ($T_{950nm}$) lying in the range 50% to 75%, thus enabling infrared electronic control buttons to be used, which emit and receive at this wavelength;

the following combination of coloring agents has been found to be advantageous (% by weight of the total composition):

$V_2O_5$ 0.025% - 0.200%
$Fe_2O_3$ 0.0095% - 0.3200%
$Cr_2O_3$ 0.01% - 0.04%.

Among the coloring agents $Fe_2O_3$ has a special place. It has an effect on color and it is indeed often present, at a greater or lesser quantity as an impurity (e.g. coming from the raw material). Nevertheless, it may also be added in order to adjust color. Its authorized presence "in large quantity" in the composition of glass-ceramics of the present application makes it possible to use raw materials that are less pure and thus often less expensive.

Concerning the condition that needs to be satisfied: the ratio (0.74 MgO + 0.19 BaO + 0.29 SrO + 0.53 CaO + 0.48 $Na_2O$ + 0.32 $K_2O$) / $Li_2O$ < 0.9, relating essentially to the CTE of the glass-ceramic, it will be understood that the compounds in the numerator sum are weighted as a function of their molar masses relative to the denominator reduced to one mole of $Li_2O$. It is actually advantageous for said ratio (0.74 MgO + 0.19 BaO + 0.29 SrO + 0.53 CaO + 0.48 $Na_2O$ + 0.32 $K_2O$) / $Li_2O$ to be less than 0.7 ((0.74 MgO + 0.19 BaO + 0.29 SrO + 0.53 CaO + 0.48 $Na_2O$ + 0.32 $K_2O$) / $Li_2O$ < 0.7). For what purpose it may serve, we remind here that the oxide contents are given in weight percentages.

The above-identified ingredients involved, or potentially involved, in the composition of glass-ceramics of the present application ($SiO_2$, $P_2O_5$, $Al_2O_3$, $Li_2O$, MgO, ZnO, $TiO_2$, $ZrO_2$, BaO, SrO, CaO, $Na_2O$, $K_2O$, fining agent(s), and coloring agent(s)) can indeed represent 100% by weight of the composition of glass-ceramics of the present application, but, *a priori,* the presence of at least one other compound is not to be totally excluded, providing it is in a low quantity (generally less than or equal to 3% by weight) and does not substantially affect the properties of the glass-ceramics. In particular, the following compounds may be present, at a total content of less than or equal to 3% by weight, each of them being present at a content less than or equal to 2% by weight: $B_2O_3$, $Nb_2O_5$, $Ta_2O_5$, $WO_3$, and $MoO_3$. Concerning $B_2O_3$, it is thus potentially present (0-2%). When present, in order to be effective, more particularly to improve fusibility of the precursor glass, it is generally present at at least 0.5%. It is more generally present in the range 0.5% to 1.5%. Nevertheless, $B_2O_3$ is rarely present in practice as an added raw material, it being generally present only in the state of traces (at contents of less than 0.1 %). Specifically, $B_2O_3$ favors ceramming into β-spodumene and the apparition of diffusion (or haze). Thus, the compositions of glass-ceramics of the present application are advantageously exempt

from $B_2O_3$, with the exception of inevitable traces.

The above-identified ingredients involved, or potentially involved, in the composition of glass-ceramics of the present application ($SiO_2$, $P_2O_5$, $Al_2O_3$, $Li_2O$, MgO, ZnO, $TiO_2$, $ZrO_2$, BaO, SrO, CaO, $Na_2O$, $K_2O$, fining agent(s), and coloring agent(s)), thus represent at least 97% by weight, or indeed 98% by weight, or at least 99% by weight, or even 100% by weight (see above) of the composition of glass-ceramics of the present application.

The glass-ceramics of the present application thus contain $SiO_2$, $Al_2O_3$, $Li_2O$, ZnO, and MgO as essential components for the solid solution of β-quartz (see below). This solid solution of β-quartz represents the main crystalline phase. This solid solution of β-quartz generally represents more than 80% by weight of the total crystallized fraction. It generally represents more than 90% by weight of said total crystallized fraction. The size of the crystals is small (typically less than 70 nm), which enables the glass-ceramics to be transparent (integrated transmission ≥ 1% and diffusion < 2%).

The glass-ceramics of the present application contain about 10% to about 40% by weight of residual glass.

The glass-ceramics of the present application thus have a coefficient of thermal expansion lying in the range $\pm\ 14{\times}10^{-7}K^{-1}$, advantageously in the range $\pm\ 10{\times}10^{-7}K^{-1}$, between 25 and 450°C; and, also advantageously, a coefficient of thermal expansion lying in the range $\pm\ 14x\ 10^{-7}K^{-1}$ between 25 and 700°C (see above).

In a second aspect, the present application provides articles that are constituted at least in part of a glass-ceramic of the present application as described above. Said articles are optionally constituted in full of a glass-ceramic of the present application. Said articles advantageously consist in cooktops, which are *a priori* bulk colored (see above). Nevertheless, that is not the only application for which they can be used. In particular, they may constitute the material constituting cooking utensils, microwave oven bottoms, oven doors, whether colored or not. It will naturally be understood that the glass-ceramics of the present application are logically used in contexts that are compatible with their CTEs. Thus, cooktops according to the invention are strongly (adapted and) recommended for use with conventional induction heating elements.

In a third aspect, the present application provides aluminosilicate glasses that are precursors for the glass-ceramics of the present application, as described above. In characteristic manner, said glasses present a composition that makes it possible to obtain said glass-ceramics. Said glasses generally present a composition corresponding to that of said glass-ceramics, but the correspondence is not necessarily complete insofar as the person skilled in the art readily understands that the thermal treatments applied to such glasses for obtaining glass-ceramics are likely to have some effect on the composition of the material. The glasses of the present application are obtained in conventional manner by melting a vitrifiable charge of raw materials (raw materials making them up being present in the appropriate proportions). Nevertheless, it can be understood (and will not surprise the person skilled in the art) that the charge in question may contain glass and/or glass-ceramic cullet. Said glasses are particularly advantageous in that:

- · they present advantageous devitrification properties, in particular compatible with using forming methods involving rolling, floating, and pressing. Said glasses present a low liquidus temperature (<1400°C) and high viscosity at the liquidus (>400 Pa.s, preferably >700 Pa.s); and/or, and advantageously and
- · they present low high-temperature viscosity ($T_{30Pa.s} \leq 1640°C$, advantageously ≤1630°C).

It should also be observed that it is possible to obtain the glass-ceramics of the present application (from said precursor glasses) by using ceramming (crystallization) thermal cycles of short duration (<3 hr), preferably of very short duration (<1 hr), and that the resistivity of said precursor glasses is low (resistivity less than 50 Ω.cm, preferably less than 20 Ω.cm, at a viscosity of 30 Pa.s).

It is particularly emphasized that the liquidus temperature is low, that viscosity at the liquidus is high, and that viscosity at high temperature is low (see below).

In its last aspect, the present application provides a method of preparing an article constituted at least in part by a glass-ceramic of the present application, as described above.

Said method is a method by analogy.

In conventional manner, said method comprises heat treatment of a charge of vitrifiable raw materials (it being understood that such a vitrifiable charge may contain glass and/or glass-ceramic cullet (see above)) under conditions that ensure melting and fining in succession, followed by shaping the fined molten precursor glass (said shaping possibly being performed by rolling, by pressing, or by floating), followed by ceramming (or crystallization) thermal treatment of the shaped refined molten precursor glass.

Table I below specifies raw materials usually used in the charges of vitrifiable raw materials to have each one of the desired oxides present in the composition of precursor glasses and corresponding glass-ceramics. This list is in no way exhaustive.

Table I

| Oxide | Used raw materials |
|---|---|
| $SiO_2$ | Quartz sand or silica sand, spodumene, petalite |
| $Al_2O_3$ | Hydrated alumina, calcined alumina, spodumene, petalite, aluminum metaphosphate |
| $Li_2O$ | Spodumene, petalite, lithium carbonate, lithium feldspar |
| $P_2O_5$ | Aluminum metaphosphate, sodium phosphate, barium phosphate, calcium phosphate |
| $CaO$ | Dolomite, calcium carbonate, calcium phosphate |
| $MgO$ | Dolomite, magnesium oxide |
| $BaO$ | Barium carbonate, barium nitrate, barium phosphate |
| $SrO$ | Strontium carbonate |
| $ZnO$ | Zinc oxide |
| $TiO_2$ | Rutile, titanium oxide |
| $ZrO_2$ | Zirconium silicate, zirconium oxide |
| $Na_2O$ | Feldspar, sodium nitrate, sodium phosphate, sodium carbonate |
| $K_2O$ | Feldspar, potassium nitrate, potassium carbonate |
| $SnO_2$ | Tin oxide |
| $V_2O_5$ | Vanadium oxide |
| $Fe_2O_3$ | Iron oxide |
| $Cr_2O_3$ | Chromite, chromium oxide |

Each one of the used raw material is able to bring impurities which are taken into account in the calculation of quantities of different raw materials constituting the vitrifiable mixture (charge). For example, spodumene contains, depending on its source, variable contents in $Li_2O$, $SiO_2$ and $Al_2O_3$ as well impurities such as $Na_2O$, $K_2O$, $Fe_2O_3$ and $P_2O_5$. $Li_2O$ is usually brought with at least one of the following raw materials: spodumene, petalite, lithium carbonate, lithium feldspar or a mixture thereof. In a preferred manner, $Li_2O$ is only brought by spodumene (this is the case for the following examples and comparative examples (see tables III and IV)).

Fining is usually carried out at a temperature superior to 1600°C.

The ceramming thermal treatment generally comprises two steps: a nucleation step and another step of growing the crystals of the β-quartz solid solution. Nucleation generally takes place in the temperature range 650°C to 830°C and crystal growth in the temperature range 850°C to 950°C. Concerning the duration of each of these steps, mention may be made in entirely non-limiting manner of about 5 minutes (min) to 60 min for nucleation and about 5 min to 30 min for crystal growth. The person skilled in the art knows how to optimize, more particularly with reference to the desired transparency, the temperatures and the durations of these two steps as a function of the composition of the precursor glasses.

Said method of preparing an article, constituted at least in part of a glass-ceramic of the present application thus comprises in succession:

- · melting a charge of vitrifiable raw materials, followed by fining the resulting molten glass;
- · cooling the resulting refined molten glass and simultaneously shaping it to the shape desired for the intended article; and
- · applying ceramming thermal treatment to said shaped glass.

The two successive steps of obtaining a shaped refined glass (precursor of the glass-ceramic) and ceramming said shaped refined glass may be performed immediately one after the other, or they may be spaced apart in time (on a single site or on different sites).

In characteristic manner, the charge of vitrifiable raw materials has a composition that makes it possible to obtain a glass-ceramic of the present application, thus presenting the composition by weight as specified above (advantageously including $SnO_2$ as a fining agent, (in the absence of $As_2O_3$ and $Sb_2O_3$ (see above)), very advantageously $SnO_2$ as single fining agent (generally 0.05% to 0.6% by weight of $SnO_2$, and more particularly 0.15% to 0.4% by weight

of $SnO_2$)). The ceramming performed on the glass obtained from such a charge is entirely conventional. It is mentioned above that said ceramming may be obtained in a short length of time (< 3 hr), or indeed in a very short length of time (< 1 hr).

In the context of preparing an article, such as a cooktop, when the precursor glass has been obtained by rolling or floating, it is generally cut before the ceramming treatment (ceramming cycle). It is generally also formed and decorated. Such forming and decorating steps may be performed before or after the ceramming thermal treatment. By way of example, the decorating may be performed by screen-printing.

The present application is illustrated below by the following examples and comparative examples. Although the examples below describe laboratory experiments only, the characteristics of the glasses and glass-ceramics that are given show that these materials can be produced at an industrial scale.

## EXAMPLES

- To produce batches of 1 kilogram (kg) of precursor glass, raw materials, in the proportions (proportions expressed by weight percentages of oxides) specified in the first portion of the tables below (table III and table IV, said tables III and IV spreading over several pages) were mixed together carefully.

The used raw material mixtures, for obtaining 1 kg of each one of the precursors glasses of examples 2, 13 and 23 of the following table III (taken for illustration), said glasses having the compositions (expressed in weight percentages) indicated in said table III, are hereafter specified in table II. The weight of each material is expressed in grams (g).

Tableau II

| Raw materials (weight (g)) | Example 2 | Example 13 | Example 23 |
|---|---|---|---|
| Quartz sand | 399.7 | 416.2 | 420.6 |
| Calcined alumina | 90.8 | 94.2 | 94.1 |
| Spodumene | 342.6 | 316.7 | 316.6 |
| Magnesium oxide | 11.8 | 8.1 | 4.9 |
| Zinc oxide | 19.6 | 31.9 | 31.9 |
| Barium nitrate | 46,9 | 41.7 | 41.6 |
| Dolomite | 11.2 | 11.6 | 11.8 |
| Rutile | 30.6 | 27.5 | 29.3 |
| Zirconium oxide | 12.9 | 17.0 | 14.2 |
| Feldspar | 47.7 | 47.2 | 47.2 |
| Tin oxide | 3.0 | 3.0 | 3.0 |
| Iron oxide | 0.3 | 0.3 | 0.3 |
| Vanadium oxide | 0.1 | 0.2 | 0.2 |
| Chromite | 0.6 | 0.6 | 0.6 |

The mixtures were placed for melting in crucibles made of platinum. The crucibles containing said mixtures were then placed in a furnace preheated to 1550°C. The furnace was heated with MoSi electrodes. The crucibles were subjected therein to a melting cycle of the following type:

- · hold at 1550° for 30 minutes (min);
- · raise temperature from 1550°C to 1650°C in 1 hr; and
- · hold at 1650°C for 5 hr 30 min.

The crucibles were then extracted from the furnace and the molten glass was poured onto a preheated steel plate. It was rolled to have a thickness of 6 mm. Glass plates were thus obtained. They were annealed at 650°C for 1 hr and subsequently cooled down slowly.

- The properties of the resulting glasses are given in the second portion of the tables below.

Viscosities were measured using a rotational viscometer (Gero).

$T_{30Pa.s}$ (°C) corresponds to the temperature at which the viscosity of the glass was 30 Pa.s.

$T_{liq}$ (°C) is the liquidus temperature. The liquidus temperature is given by a range of temperatures and associated viscosities: the highest temperature corresponds to the minimum temperature at which no crystal was observed, the lowest temperature corresponds to the maximum temperature at which crystals were observed. The experiments were carried out on precursor glass volumes of about 0.5 cubic centimeters ($cm^3$) that were held for 17 h at the temperature of the test and the observations were performed by optical microscopy. The phase of the observed crystals is given in the tables below.

The resistivity of glass was measured while measuring viscosity. The table gives the resistivity measured at the temperature for which the viscosity was 30 Pa.s.

- The ceramming cycle performed in a static furnace (in an atmosphere of ambient air) is set out below:

  - · rapid temperature rise up to 500°C;
  - · temperature rise from 500°C to 650°C at a rate of 23°C/min;
  - · temperature rise from 650°C to 820°C at a rate of 6.7°C/min;
  - · temperature rise from 820°C to 920°C at a rate of 15°C/min;
  - · holding this temperature Tmax (= 920°C) for 7 min;
  - · cooling down to 850°C at 35°C/min;
  - • cooling down to ambient temperature as a function of the inertia of the furnace.

- The properties of the glass-ceramics obtained are given in the last portion of the tables below.

These glass-ceramics contain a solid solution of β-quartz as the main crystalline phase (as verified by X-ray diffraction).

The coefficients of thermal expansion (CTEs) (from 25°C to 450°C = $CTE_{(25-450°C)}$ and also from 25°C to 700°C = $CTE_{(25-700°C)}$) were measured using a high-temperature dilatometer (DIL 420C, Netzsch) heating at a rate of 3°C/min, on bar-shaped glass-ceramic samples.

On polished samples having a thickness of 4 mm, total and diffuse transmission measurements were performed using a Varian spectrophotometer (model Cary 500 Scan), fitted with an integrating sphere. On the basis of these measurements, the integrated transmission (Y (%)) in the visible range (380 mm to 780 mm) and the level of haze (diffusion (%)) were calculated using the standard ASTM D 1003-13 (with D65 illuminant and 2° observer). A value of Y that is below 10% is recommended in order to hide the induction heating elements and other technical components arranged under the cooktop. A level of haze of less than 2% is recommend in order to ensure good visibility of the red light emitted by the LEDs that are generally arranged under the cooktop. Transmission values (at 625 nm ($T_{625nm}$) and at 950 nm ($T_{950nm}$)) are also specified in the tables.

- Examples 1 to 26 (in Table III: IIIA to IIIG) illustrate the present application.

Examples 1 to 4 are preferred because of the particularly advantageous properties of the precursor glass: see the values given for high-temperature viscosity ($T_{30Pa.s}$ < 1630°C) and for liquidus viscosity (> 700 Pa.s).

Examples 4 and 11 show the advantage of having $P_2O_5$ present in the composition of the precursor glass. This presence leads to a reduction in the liquidus temperature (about -15°C) and consequently to an increase in viscosity at the liquidus temperature (+ 200 Pa.s).

The precursor glasses of Examples 5 to 15 present preferred values for viscosity at high temperature (< 1630°C).

The precursor glasses of Examples 16 to 20 present preferred values for viscosity at the liquidus (> 700 Pa.s). Examples 24 to 26 show the use of SrO in complement to BaO.

Examples A to E (in Tables IVA and IVB) are comparative examples.

In comparative example A, the content of $SiO_2$ is high (67.88%). The high-temperature viscosity is too high. It would be particularly difficult to manage melting and fining said precursor glass.

In comparative example B, the contents of $SiO_2$ and of BaO are high (respectively 67.74% and 4.25%). The high-temperature viscosity is too high. It would be difficult to manage melting and fining said precursor glass.

In comparative example C, the content of MgO is too high (1.74%) and the ratio (0.74 MgO + 0.19 BaO + 0.29 SrO + 0.53 CaO + 0.48 $Na_2O$ + 0.32 $K_2O$) / $Li_2O$ is greater than 0.90. Consequently the CTE of the glass-ceramic is too high. Said glass-ceramic is therefore not suitable to be the material for making cooktops that are to be used with (conventional) induction heating elements.

In comparative example D, the ZnO content is too high. Consequently, the viscosity at the liquidus of the precursor glass is too low.

In comparative example E the ratio (0.74 MgO + 0.19 BaO + 0.29 SrO + 0.53 CaO + 0.48 $Na_2O$ + 0.32 $K_2O$) / $Li_2O$ is greater than 0.90. Consequently the CTE of the glass-ceramic is too high.

Table IIIA

| Examples (wt %) | 1 | 2 | 3 | 4 |
|---|---|---|---|---|
| $SiO_2$ | 66.98 | 66.98 | 65.75 | 65.06 |
| $P_2O_5$ | 0.04 | 0.04 | 1.14 | 2.11 |
| $Al_2O_3$ | 18.92 | 18.86 | 19.64 | 18.81 |
| $Li_2O$ | 2.53 | 2.48 | 2.82 | 2.66 |
| MgO | 1.34 | 1.34 | 0.30 | 0.33 |
| ZnO | 1.85 | 1.80 | 2.27 | 2.96 |
| BaO | 2.48 | 2.76 | 2.09 | 2.42 |
| CaO | 0.45 | 0.46 | 0.33 | 0.47 |
| $TiO_2$ | 2.73 | 2.89 | 2.95 | 2.79 |
| $ZrO_2$ | 1.44 | 1.18 | 1.19 | 1.12 |
| $Na_2O$ | 0.61 | 0.60 | 0.88 | 0.66 |
| $K_2O$ | 0.17 | 0.17 | 0.17 | 0.15 |
| $SnO_2$ | 0.28 | 0.29 | 0.30 | 0.28 |
| $Fe_2O_3$ | 0.13 | 0.10 | 0.12 | 0.12 |
| $V_2O_5$ | 0.03 | 0.03 | 0.04 | 0.04 |
| $Cr_2O_3$ | 0.02 | 0.02 | 0.03 | 0.02 |
| (0.74 MgO + 0.19 BaO + 0.29 SrO+ 0.53 CaO + 0.48 $Na_2O$ + 0.32 $K_2O$) / $Li_2O$ | 0.81 | 0.85 | 0.45 | 0.50 |
| **Precursor glass properties** | | | | |
| $T_{(30Pa.s)}$ (°C) | 1623 | 1627 | 1628 | 1624 |
| Resistivity at 30Pa.s ($\Omega$.cm) | 5.2 | 5.2 | 3.5 | 4.1 |
| $T_{liq}$ (°C) | 1309-1334 | 1311-1328 | 1326-1339 | 1322-1339 |
| Viscosity at $T_{liq}$ (Pa.s) | 810-1170 | 900-1170 | 740-900 | 750-970 |
| Crystalline phase devitrifying at $T_{liq}$ | spinel + zircon | spinel | spinel | Spinel |
| **Glass-ceramic properties** | | | | |
| $CTE_{(25-700°C)}$ (x $10^{-7}$ $K^{-1}$) | 12.0 | 13.1 | 5.6 | 3.3 |
| $CTE_{(25-450°C)}$ (x $10^{-7}$ $K^{-1}$) | 11.7 | 12.9 | 4.9 | 3.1 |
| Y (%) | 5.6 | 2.4 | 1.5 | 0.9 |
| Diffusion (%) | 0.5 | 0.4 | 0.6 | 1.0 |
| $T_{625nm}$ (%) | 14.0 | 6.6 | 4.7 | 2.9 |
| $T_{950nm}$ (%) | 67 | 66 | 65 | 60 |

Table IIIB

| Examples (wt %) | 5 | 6 | 7 | 8 |
|---|---|---|---|---|
| $SiO_2$ | 66.60 | 66.92 | 65.07 | 66.67 |
| $P_2O_5$ | 0.05 | 0.05 | 2.12 | 0.05 |
| $Al_2O_3$ | 19.95 | 18.83 | 18.69 | 18.53 |
| $Li_2O$ | 2.89 | 2.59 | 2.61 | 2.75 |
| MgO | 0.95 | 0.45 | 0.45 | 0.44 |
| ZnO | 2.23 | 3.05 | 2.95 | 2.11 |
| BaD | 1.83 | 2.42 | 2.38 | 3.89 |
| CaO | 0.49 | 0.47 | 0.47 | 0.48 |
| $TiO_2$ | 2.70 | 2.67 | 2.66 | 2.61 |
| $ZrO_2$ | 1.46 | 1.26 | 1.29 | 1.25 |
| $Na_2O$ | 0.23 | 0.65 | 0.66 | 0.60 |
| $K_2O$ | 0.14 | 0.15 | 0.17 | 0.17 |
| $SnO_2$ | 0.29 | 0.28 | 0.29 | 0.29 |
| $Fe_2O_3$ | 0.12 | 0.15 | 0.13 | 0.10 |
| $V_2O_5$ | 0.04 | 0.04 | 0.04 | 0.04 |
| $Cr_2O_3$ | 0.03 | 0.02 | 0.02 | 0.02 |
| $(0.74\ MgO + 0.19\ BaO + 0.29\ SrO + 0.53\ CaO + 0.48\ Na_2O + 0.32\ K_2O) / Li_2O$ | 0.51 | 0.54 | 0.54 | 0.60 |
| **Precursor glass properties** | | | | |
| $T_{(30Pa.s)}$ (°C) | 1621 | 1629 | 1625 | 1620 |
| Resistivity at 30Pa.s (Ω.cm) | 4.1 | 5 | 4.7 | 4.2 |
| $T_{liq}$ (°C) | 1328-1353 | 1347-1363 | 1345-1361 | 1330-1346 |
| Viscosity at $T_{liq}$ (Pa.s) | 590-860 | 540-690 | 520-660 | 630-800 |
| Crystalline phase devitrifying at $T_{liq}$ | mullite + spinel | spinel | spinel | zircon |
| **Glass-ceramic properties** | | | | |
| $CTE_{(25-700°C)}$ (x $10^{-7}$ $K^{-1}$) | 4.9 | 4.7 | 3.7 | 7.2 |
| $CTE_{(25-450°C)}$ (x $10^{-7}$ $K^{-1}$) | 3.2 | 4.0 | 3.4 | 6.2 |
| Y (%) | - | 5.3 | 1.2 | - |
| Diffusion (%) | - | 0.3 | 0.7 | - |
| $T_{625nm}$ (%) | - | 13.8 | 3.9 | - |
| $T_{950nm}$ (%) | - | 64 | 61 | - |

Table IIIC

| Examples (wt %) | 9 | 10 | 11 | 12 |
|---|---|---|---|---|
| $SiO_2$ | 66.77 | 66.92 | 66.88 | 65.67 |
| $P_2O_5$ | 0.05 | 0.04 | 0.05 | 1.12 |
| $Al_2O_3$ | 18.43 | 18.44 | 18.93 | 19.62 |

(continued)

| Examples (wt %) | 9 | 10 | 11 | 12 |
|---|---|---|---|---|
| $Li_2O$ | 2.77 | 2.30 | 2.62 | 2.83 |
| MgO | 0.53 | 1.15 | 0.34 | 0.33 |
| ZnO | 2.03 | 2.95 | 2.99 | 2.17 |
| BaO | 3.84 | 2.45 | 2.45 | 2.47 |
| CaO | 0.47 | 0.47 | 0.49 | 0.49 |
| $TiO_2$ | 2.62 | 2.80 | 2.84 | 2.89 |
| $ZrO_2$ | 1.26 | 1.21 | 1.13 | 1.16 |
| $Na_2O$ | 0.61 | 0.66 | 0.66 | 0.61 |
| $K_2O$ | 0.17 | 0.17 | 0.16 | 0.16 |
| $SnO_2$ | 0.29 | 0.28 | 0.29 | 0.29 |
| $Fe_2O_3$ | 0.10 | 0.11 | 0.11 | 0.12 |
| $V_2O_5$ | 0.04 | 0.03 | 0.04 | 0.04 |
| $Cr_2O_3$ | 0.02 | 0.02 | 0.02 | 0.03 |
| $(0.74\,MgO + 0.19\,BaO + 0.29\,SrO + 0.53\,CaO + 0.48\,Na_2O + 0.32\,K_2O) / Li_2O$ | 0.62 | 0.84 | 0.51 | 0.47 |
| **Precursor glass properties** | | | | |
| $T_{(30Pa.s)}$ (°C) | 1627 | 1620 | 1626 | 1621 |
| Resistivity at 30Pa.s (Ω.cm) | 4.4 | 4.7 | 4.2 | 3.6 |
| $T_{liq}$ (°C) | 1330-1346 | 1346-1365 | 1339-1353 | 1325-1342 |
| Viscosity at $T_{liq}$ (Pa.s) | 640-820 | 470-620 | 590-720 | 680-880 |
| Crystalline phase devitrifying at $T_{liq}$ | zircon | spinel | spinel | spinel |
| **Glass-ceramic properties** | | | | |
| $CTE_{(25-700°C)}$ (x $10^{-7}$ $K^{-1}$) | 7.3 | 10.3 | 4.3 | 4.5 |
| $CTE_{(25-450°C)}$ (x $10^{-7}$ $K^{-1}$) | 6.4 | 10.1 | 3.5 | 3.5 |
| Y (%) | - | - | 2.8 | 1.7 |
| Diffusion (%) | - | - | 0.4 | 0.4 |
| $T_{625nm}$ (%) | - | - | 7.9 | 5.2 |
| $T_{950nm}$ (%) | - | - | 66 | 64 |

Table IIID

| Examples (wt %) | 13 | 14 | 15 | 16 |
|---|---|---|---|---|
| $SiO_2$ | 67.04 | 66.72 | 65.40 | 67.08 |
| $P_2O_5$ | 0.04 | 0.04 | 1.12 | 0.05 |
| $Al_2O_3$ | 18.48 | 19.54 | 20.54 | 19.15 |
| $Li_2O$ | 2.33 | 2.46 | 2.88 | 2.44 |
| MgO | 0.98 | 1.21 | 0.39 | 1.19 |
| ZnO | 2.99 | 1.79 | 2.59 | 1.78 |
| BaO | 2.42 | 2.45 | 0.01 | 2.49 |

(continued)

| Examples (wt %) | 13 | 14 | 15 | 16 |
|---|---|---|---|---|
| CaO | 0.46 | 0.47 | 1.49 | 0.47 |
| $TiO_2$ | 2.57 | 2.91 | 2.93 | 2.95 |
| $ZrO_2$ | 1.42 | 1.20 | 1.34 | 1.19 |
| $Na_2O$ | 0.65 | 0.60 | 0.63 | 0.59 |
| $K_2O$ | 0.16 | 0.17 | 0.16 | 0.18 |
| $SnO_2$ | 0.29 | 0.28 | 0.30 | 0.28 |
| $Fe_2O_3$ | 0.12 | 0.11 | 0.15 | 0.11 |
| $V_2O_5$ | 0.03 | 0.03 | 0.04 | 0.03 |
| $Cr_2O_3$ | 0.02 | 0.02 | 0.03 | 0.02 |
| (0.74 MgO + 0.19 BaO + 0.29 SrO+ 0.53 CaO + 0.48 $Na_2O$ + 0.32 $K_2O$) / $Li_2O$ | 0.77 | 0.79 | 0.50 | 0.80 |
| **Precursor glass properties** | | | | |
| $T_{(30Pa.s)}$ (°C) | 1620 | 1622 | 1612 | 1640 |
| Resistivity at 30Pa.s ($\Omega$.cm) | 5.6 | 4.7 | 3.6 | 4.3 |
| $T_{liq}$ (°C) | 1339-1353 | 1334-1346 | 1326-1342 | 1330-1352 |
| Viscosity at $T_{liq}$ (Pa.s) | 570-670 | 670-790 | 600-760 | 730-1010 |
| Crystalline phase devitrifying at $T_{liq}$ | spinel + zircon | mullite | spinel | spinel + mullite |
| **Glass-ceramic properties** | | | | |
| $CTE_{(25-700°C)}$ (x $10^{-7}$ $K^{-1}$) | 9.2 | 13.2 | 2.9 | 12.6 |
| $CTE_{(25-450°C)}$ (x $10^{-7}$ $K^{-1}$) | 8.8 | 12.9 | 2.4 | 12.6 |
| Y (%) | 5.5 | 4.6 | 1.2 | 3.8 |
| Diffusion (%) | 0.4 | 0.6 | 1.2 | 0.6 |
| $T_{625nm}$ (%) | 14.4 | 11.2 | 3.8 | 9.7 |
| $T_{950nm}$ (%) | 65 | 68 | 62 | 67 |

Table IIIE

| Examples (wt %) | 17 | 18 | 19 | 20 |
|---|---|---|---|---|
| $SiO_2$ | 67.29 | 65.22 | 65.04 | 64.87 |
| $P_2O_5$ | 0.04 | 2.13 | 2.17 | 2.13 |
| $Al_2O_3$ | 18.98 | 19.52 | 19.36 | 19.45 |
| $Li_2O$ | 2.45 | 2.80 | 2.78 | 2.80 |
| MgO | 1.20 | 0.32 | 0.32 | 0.33 |
| ZnO | 1.79 | 1.79 | 2.11 | 2.16 |
| BaO | 2.45 | 2.46 | 2.44 | 2.46 |
| CaO | 0.47 | 0.48 | 0.50 | 0.50 |
| $TiO_2$ | 2.92 | 2.87 | 2.88 | 2.89 |
| $ZrO_2$ | 1.20 | 1.18 | 1.15 | 1.15 |
| $Na_2O$ | 0.60 | 0.60 | 0.61 | 0.62 |

(continued)

| Examples (wt %) | 17 | 18 | 19 | 20 |
|---|---|---|---|---|
| $K_2O$ | 0.17 | 0.17 | 0.16 | 0.17 |
| $SnO_2$ | 0.28 | 0.29 | 0.29 | 0.30 |
| $Fe_2O_3$ | 0.11 | 0.11 | 0.13 | 0.11 |
| $V_2O_5$ | 0.03 | 0.04 | 0.04 | 0.04 |
| $Cr_2O_3$ | 0.02 | 0.02 | 0.02 | 0.02 |
| $(0.74\,MgO + 0.19\,BaO + 0.29\,SrO + 0.53\,CaO + 0.48\,Na_2O + 0.32\,K_2O) / Li_2O$ | 0.79 | 0.46 | 0.47 | 0.47 |
| **Precursor glass properties** | | | | |
| $T_{(30Pa.s)}$ (°C) | 1638 | 1640 | 1635 | 1631 |
| Resistivity at 30Pa.s (Ω.cm) | - | 3.9 | 4.2 | 4.2 |
| $T_{liq}$ (°C) | 1330-1350 | 1294-1320 | 1309-1335 | 1311-1327 |
| Viscosity at $T_{liq}$ (Pa.s) | 740-1000 | 1170-1770 | 860-1270 | 920-1180 |
| Crystalline phase devitrifying at $T_{liq}$ | spinel | spinel | spinel | spinel |
| **Glass-ceramic properties** | | | | |
| $CTE_{(25-700°C)}$ (x $10^{-7}$ $K^{-1}$) | 12.3 | 4.8 | 4.2 | 4.1 |
| $CTE_{(25-450°C)}$ (x $10^{-7}$ $K^{-1}$) | 12.3 | 4.3 | 3.7 | 3.6 |
| Y (%) | 3.2 | 1.3 | 1.0 | |
| Diffusion (%) | 0.6 | 0.8 | 0.7 | |
| $T_{625nm}$ (%) | 8.4 | 4.0 | 3.2 | - |
| $T_{950nm}$ (%) | 64 | 64 | 61 | - |

Table IIIF

| Examples (wt %) | 21 | 22 | 23 |
|---|---|---|---|
| $SiO_2$ | 67.01 | 66.72 | 67.27 |
| $P_2O_5$ | 0.05 | 0.05 | 0.04 |
| $Al_2O_3$ | 18.88 | 18.40 | 18.50 |
| $Li_2O$ | 2.68 | 2.60 | 2.30 |
| $MgO$ | 0.31 | 0.46 | 0.71 |
| $ZnO$ | 2.93 | 2.94 | 3.01 |
| $BaO$ | 2.42 | 2.96 | 2.45 |
| $CaO$ | 0.48 | 0.71 | 0.48 |
| $TiO_2$ | 2.69 | 2.65 | 2.77 |
| $ZrO_2$ | 1.29 | 1.25 | 1.19 |
| $Na_2O$ | 0.64 | 0.65 | 0.67 |
| $K_2O$ | 0.15 | 0.15 | 0.17 |
| $SnO_2$ | 0.28 | 0.28 | 0.28 |
| $Fe_2O_3$ | 0.13 | 0.12 | 0.11 |
| $V_2O_5$ | 0.04 | 0.04 | 0.03 |

(continued)

| Examples (wt %) | 21 | 22 | 23 |
|---|---|---|---|
| $Cr_2O_3$ | 0.02 | 0.02 | 0.02 |
| $(0.74\,MgO + 0.19\,BaO + 0.29\,SrO + 0.53\,CaO + 0.48\,Na_2O + 0.32\,K_2O)/Li_2O$ | 0.48 | 0.63 | 0.70 |
| **Precursor glass properties** | | | |
| $T_{(30Pa.s)}$ (°C) | 1637 | 1635 | 1640 |
| Resistivity at 30Pa.s (Ω.cm) | 3.9 | 3.6 | 5.4 |
| $T_{liq}$ (°C) | 1347-1364 | 1346-1363 | 1339-1357 |
| Viscosity at $T_{liq}$ (Pa.s) | 590-750 | 570-730 | 660-850 |
| Crystalline phase devitrifying at $T_{liq}$ | spinel | spinel | spinel |
| **Glass-ceramic properties** | | | |
| $CTE_{(25-700°C)}$ (x $10^{-7}$ $K^{-1}$) | 3.4 | 5.6 | 8.1 |
| $CTE_{(25-450°C)}$ (x $10^{-7}$ $K^{-1}$) | 2.6 | 4.8 | 7.8 |
| Y (%) | 4.6 | 2.1 | - |
| Diffusion (%) | 0.7 | 0.7 | - |
| $T_{625nm}$ (%) | 12.3 | 6.4 | - |
| $T_{950nm}$ (%) | 66 | 63 | - |

Table IIIG

| Examples (wt %) | 24 | 25 | 26 |
|---|---|---|---|
| $SiO_2$ | 66.66 | 66.24 | 64.88 |
| $P_2O_5$ | 0.04 | 0.04 | 2.10 |
| $Al_2O_3$ | 19.31 | 19.66 | 19.11 |
| $Li_2O$ | 2.50 | 2.56 | 2.67 |
| MgO | 1.37 | 1.41 | 0.35 |
| ZnO | 1.88 | 2.04 | 3.06 |
| BaO | 1.40 | 0.004 | 1.25 |
| SrO | 0.89 | 1.89 | 0.73 |
| CaO | 0.45 | 0.46 | 0.47 |
| $TiO_2$ | 2.94 | 2.97 | 2.82 |
| $ZrO_2$ | 1.32 | 1.48 | 1.24 |
| $Na_2O$ | 0.61 | 0.62 | 0.67 |
| $K_2O$ | 0.17 | 0.17 | 0.17 |
| $SnO_2$ | 0.29 | 0.28 | 0.29 |
| $Fe_2O_3$ | 0.11 | 0.13 | 0.12 |
| $V_2O_5$ | 0.03 | 0.02 | 0.04 |
| $Cr_2O_3$ | 0.03 | 0.03 | 0.03 |
| $(0.74\,MgO + 0.19\,BaO + 0.29\,SrO + 0.53\,CaO + 0.48\,Na_2O + 0.32\,K_2O)/Li_2O$ | 0.85 | 0.85 | 0.50 |

(continued)

| Precursor glass properties | | | |
|---|---|---|---|
| $T_{(30Pa.s)}$ (°C) | 1631 | 1625 | 1635 |
| Resistivity at 30Pa.s (Ω.cm) | - | 4.1 | 3.6 |
| $T_{liq}$ (°C) | 1317-1335 | 1313-1332 | 1330-1344 |
| Viscosity at $T_{liq}$ (Pa.s) | 840-1100 | 840-1120 | 780-960 |
| Crystalline phase devitrifying at $T_{liq}$ | spinel | spinel | spinel |
| **Glass-ceramic properties** | | | |
| $CTE_{(25-700°C)}$ (x $10^{-7}$ $K^{-1}$) | 12.7 | 12.3 | 3.5 |
| $CTE_{(25-450°C)}$ (x $10^{-7}$ $K^{-1}$) | 12.5 | 12.1 | 3.2 |
| Y (%) | 2.4 | 2.3 | 0.9 |
| Diffusion (%) | 0.2 | 0.1 | 0.1 |
| $T_{625nm}$ (%) | 6.7 | 6.4 | 3.0 |
| $T_{950nm}$ (%) | 66 | 65 | 62 |

Table IV A

| Comparative examples (wt %) | A | B | C | D |
|---|---|---|---|---|
| $SiO_2$ | 67.88 | 67.74 | 66.74 | 66.02 |
| $P_2O_5$ | 0.04 | 0.06 | 0.03 | 0.06 |
| $Al_2O_3$ | 19.00 | 18.46 | 19.08 | 19.40 |
| $Li_2O$ | 2.27 | 2.47 | 2.32 | 2.80 |
| MgO | 0.90 | 0.24 | 1.74 | 0.31 |
| ZnO | 1.83 | 1.23 | 1.83 | 3.30 |
| BaO | 2.44 | 4.25 | 2.47 | 2.42 |
| CaO | 0.47 | 0.45 | 0.45 | 0.48 |
| $TiO_2$ | 2.73 | 2.80 | 2.91 | 2.83 |
| $ZrO_2$ | 1.26 | 1.11 | 1.21 | 1.04 |
| $Na_2O$ | 0.59 | 0.57 | 0.60 | 0.68 |
| $K_2O$ | 0.17 | 0.21 | 0.17 | 0.15 |
| $SnO_2$ | 0.27 | 0.27 | 0.29 | 0.29 |
| $Fe_2O_3$ | 0.10 | 0.07 | 0.11 | 0.15 |
| $V_2O_5$ | 0.03 | 0.05 | 0.03 | 0.04 |
| $Cr_2O_3$ | 0.02 | 0.02 | 0.02 | 0.03 |
| (0.74 MgO + 0.19 BaO + 0.29 SrO+ 0.53 CaO + 0.48 $Na_2O$ + 0.32 $K_2O$) / $Li_2O$ | 0.76 | 0.63 | 1.01 | 0.46 |
| **Precursor glass properties** | | | | |
| $T_{(30Pa.s)}$ (°C) | 1656 | 1681 | 1619 | 1600 |
| Resistivity at 30Pa.s (Ω.cm) | 5.5 | 5.4 | 5.6 | 4.4 |
| $T_{liq}$ (°C) | 1361-1372 | 1296-1325 | 1328-1346 | 1362-1372 |
| Viscosity at $T_{liq}$ (Pa.s) | 750-880 | 1700-2700 | 660-870 | 360-420 |

(continued)

| Precursor glass properties | | | | |
|---|---|---|---|---|
| Crystalline phase devitrifying at $T_{liq}$ | mullite | zircon + mullite | spinel + mullite | spinel |
| **Glass-ceramic properties** | | | | |
| $CTE_{(25-700°C)}$ (x $10^{-7}$ $K^{-1}$) | 11.1 | - | 14.6 | 2.7 |
| $CTE_{(25-450°C)}$ (x $10^{-7}$ $K^{-1}$) | 10.8 | - | 14.4 | 1.3 |
| Y (%) | 7.9 | - | 1.9 | 0.9 |
| Diffusion (%) | 2.3 | - | 0.7 | 1.0 |
| $T_{625nm}$ (%) | 17.4 | - | 5.3 | 2.8 |
| $T_{950nm}$ (%) | 69 | - | 64 | 59 |

Table IV B

| Comparative examples (wt %) | E |
|---|---|
| $SiO_2$ | 66.44 |
| $P_2O_5$ | 0.03 |
| $Al_2O_3$ | 18.73 |
| $Li_2O$ | 2.19 |
| MgO | 1.31 |
| ZnO | 1.65 |
| BaO | 3.46 |
| CaO | 1.07 |
| $TiO_2$ | 2.79 |
| $ZrO_2$ | 1.12 |
| $Na_2O$ | 0.60 |
| $K_2O$ | 0.17 |
| $SnO_2$ | 0.29 |
| $Fe_2O_3$ | 0.10 |
| $V_2O_5$ | 0.03 |
| $Cr_2O_3$ | 0.02 |
| $(0.74\,MgO + 0.19\,BaO + 0.29\,SrO + 0.53\,CaO + 0.48\,Na_2O + 0.32\,K_2O)/Li_2O$ | 1.16 |
| **Precursor glass properties** | |
| $T_{(30Pa.s)}$ (°C) | 1615 |
| Resistivity at 30Pa.s ($\Omega$.cm) | 5.7 |
| **Glass-ceramic properties** | |
| $CTE_{(25-700°C)}$ (x $10^{-7}$ $K^{-1}$) | 18.1 |
| $CTE_{(25-450°C)}$ (x $10^{-7}$ $K^{-1}$) | 17.5 |
| Y (%) | 2.4 |
| Diffusion (%) | 0.7 |
| $T_{625nm}$ (%) | 6.5 |

(continued)

| Glass-ceramic properties | |
|---|---|
| $T_{950nm}$ (%) | 65 |

## Claims

1. A transparent glass-ceramic of lithium aluminosilicate type containing a solid solution of $\beta$-quartz as its main crystalline phase, the composition of which, expressed in percentages by weight of oxides, comprises:

   · 63% to 67.5% of $SiO_2$;
   · 18% to 21% of $Al_2O_3$;
   · 2% to 2.9% of $Li_2O$;
   · 0 to 1.5% of MgO;
   · 1% to 3.2% of ZnO;
   · 0 to 4% of BaO;
   · 0 to 4% of SrO;
   · 0 to 2% of CaO;
   · 2% to 5% of $TiO_2$;
   · 0 to 3% of $ZrO_2$;
   · 0 to 1% of $Na_2O$;
   · 0 to 1% of $K_2O$;
   · 0 to 5% of $P_2O_5$;

   with (0.74 MgO + 0.19 BaO + 0.29 SrO + 0.53 CaO + 0.48 $Na_2O$ + 0.32 $K_2O$) / $Li_2O$ < 0.9;

   · optionally up to 2% of at least one fining agent; and
   · optionally up to 2% of at least one coloring agent.

2. The glass-ceramic according to claim 1, wherein the composition comprises a content of $Li_2O$ that is less than or equal to 2.85%, or greater or equal to 2.20%, most advantageously from 2.20% to 2.85%.

3. The glass-ceramic according to claim 1 or 2, wherein the composition comprises 1% to 3% of ZnO.

4. The glass-ceramic according to any one of claims 1 to 3, wherein the composition comprises at least 0.5% of $P_2O_5$, advantageously from 1% to 3% of $P_2O_5$.

5. The glass-ceramic according to any one of claims 1 to 3, wherein, except for inevitable traces, the composition does not contain any $P_2O_5$ and comprises 1% to 2.5% of ZnO.

6. The glass-ceramic according to any one of claims 1 to 5, wherein, except for inevitable traces, the composition does not comprise any $B_2O_3$.

7. The glass-ceramic according to any one of claims 1 to 6, wherein the composition, free from $As_2O_3$ and of $Sb_2O_3$, except for inevitable traces, comprises $SnO_2$ as fining agent, advantageously 0.05% to 0.6% of $SnO_2$, most advantageously 0.15% to 0.4% of $SnO_2$.

8. The glass-ceramic according to any one of claims 1 to 7, wherein the composition contains $V_2O_5$ as coloring agent, alone or mixed with at least one other coloring agent selected from CoO, $Cr_2O_3$, and $Fe_2O_3$.

9. The glass-ceramic according to any one of claims 1 to 8, having a coefficient of thermal expansion lying in the range $\pm$ 14$\times$10$^{-7}$K$^{-1}$ between 25 and 450°C; and, also advantageously, a coefficient of thermal expansion lying in the range $\pm$ 14$\times$10$^{-7}$K$^{-1}$ between 25 and 700°C.

10. An article that is constituted, at least in part, of a glass-ceramic according to any one of claims 1 to 9, consisting in particular of a cooktop.

**11.** A lithium aluminosilicate glass, precursor for a glass-ceramic according to any one of claims 1 to 9, of composition that makes it possible to obtain a glass-ceramic according to any one of claims 1 to 9.

**12.** The glass according to claim 11, having a liquidus temperature of less than 1400°C and a viscosity at the liquidus of more than 400 Pa.s; and/or, advantageously and, a viscosity of 30 Pa.s at a temperature of at most 1640°C ($T_{30Pa.s} \leq 1640°C$).

**13.** A method of preparing an article according to claim 10, comprising in succession:

- · melting a vitrifiable charge of raw materials, followed by fining the resulting molten glass;
- · cooling the resulting refined molten glass and simultaneously shaping it to the shape desired for the intended article; and
- · applying ceramming thermal treatment to said shaped glass;

the method being **characterized in that** said charge has a composition that makes it possible to obtain a glass-ceramic having the composition by weight set out in any one of claims 1 to 8.

**14.** The method according to claim 13, **characterized in that** said vitrifiable charge of raw materials, free from $As_2O_3$ and of $Sb_2O_3$, except for inevitable traces, contains $SnO_2$ as fining agent, advantageously 0.05% to 0.6% of $SnO_2$.

**Patentansprüche**

**1.** Transparente Glaskeramik vom Lithium-Aluminosilikat-Typ, die einen Mischkristall aus Beta-Quarz als Hauptkristallphase enthält und deren Zusammensetzung, ausgedrückt in Gewichtsprozent von Oxiden, umfasst:

- 63 % bis 67,5 % $SiO_2$,
- 18 % bis 21 % $Al_2O_3$,
- 2 % bis 2,9 % $Li_2O$,
- 0 bis 1,5 % MgO,
- 1 % bis 3,2 % ZnO,
- 0 bis 4 % BaO,
- 0 bis 4 % SrO,
- 0 bis 2 % CaO,
- 2 % bis 5 % $TiO_2$,
- 0 bis 3 % $ZrO_2$,
- 0 bis 1 % $Na_2O$,
- 0 bis 1 % $K_2O$,
- 0 bis 5 % $P_2O_5$,

wobei (0,74 MgO + 0,19 BaO + 0,29 SrO + 0,53 CaO + 0,48 $Na_2O$ + 0,32 $K_2O$) / $Li_2O$ < 0,9,

- gegebenenfalls bis zu 2 % mindestens eines Läuterungsmittels, und
- gegebenenfalls bis zu 2 % mindestens eines Farbstoffs.

**2.** Glaskeramik nach Anspruch 1, wobei die Zusammensetzung einen Gehalt an $Li_2O$ umfasst, der kleiner als oder gleich 2,85 % oder größer als oder gleich 2,20 %, am vorteilhaftesten 2,20% bis 2,85 %, ist.

**3.** Glaskeramik nach Anspruch 1 oder 2, wobei die Zusammensetzung 1 % bis 3 % ZnO umfasst.

**4.** Glaskeramik nach einem der Ansprüche 1 bis 3, wobei die Zusammensetzung mindestens 0,5 % $P_2O_5$, vorteilhafterweise 1 % bis 3 % $P_2O_5$, umfasst.

**5.** Glaskeramik nach einem der Ansprüche 1 bis 3, wobei die Zusammensetzung, mit Ausnahme von unvermeidbaren Spuren, kein $P_2O_5$ enthält und 1 % bis 2,5 % ZnO umfasst.

**6.** Glaskeramik nach einem der Ansprüche 1 bis 5, wobei die Zusammensetzung, mit Ausnahme von unvermeidbaren Spuren, kein $B_2O_3$ umfasst.

7.  Glaskeramik nach einem der Ansprüche 1 bis 6, wobei die Zusammensetzung, die frei von $As_2O_3$ und von $Sb_2O_3$ mit Ausnahme von unvermeidbaren Spuren ist, $SnO_2$ als Läuterungsmittel, vorteilhafterweise 0,05 % bis 0,6 % $SnO_2$, am vorteilhaftesten 0,15 % bis 0,4 % $SnO_2$, umfasst.

8.  Glaskeramik nach einem der Ansprüche 1 bis 7, wobei die Zusammensetzung $V_2O_5$ als Farbstoff, allein oder mit mindestens einem anderen aus CoO, $Cr_2O_3$ und $Fe_2O_3$ ausgewählten Farbstoff gemischt, enthält.

9.  Glaskeramik nach einem der Ansprüche 1 bis 8, die einen Wärmeausdehnungskoeffizienten, der im Bereich von $\pm\,14\times10^{-7}K^{-1}$ zwischen 25 und 450 °C liegt, und zudem vorteilhafterweise einen Wärmeausdehnungskoeffizienten, der im Bereich von $\pm\,14\times10^{-7}K^{-1}$ zwischen 25 und 700 °C liegt, aufweist.

10. Erzeugnis, das zumindest teilweise aus einer Glaskeramik nach einem der Ansprüche 1 bis 9 gebildet ist und insbesondere aus einem Kochfeld besteht.

11. Lithium-Aluminosilikatglas, Vorstufe für eine Glaskeramik nach einem der Ansprüche 1 bis 9, mit einer Zusammensetzung, die es ermöglicht, eine Glaskeramik nach einem der Ansprüche 1 bis 9 zu erlangen.

12. Glas nach Anspruch 11, das eine Liquidustemperatur von kleiner als 1400 °C und eine Viskosität beim Liquidus von mehr als 400 Pa.s, und/oder, vorteilhafterweise und, eine Viskosität von 30 Pa.s bei einer Temperatur von höchstens 1640 °C ($T_{30\,Pa.s} \le$ 1640 °C) aufweist.

13. Verfahren zum Herstellen eines Erzeugnisses nach Anspruch 10, nacheinander umfassend:

    - Schmelzen einer verglasbaren Ladung von Rohmaterialien, gefolgt von Läutern der resultierenden Glasschmelze,
    - Kühlen der resultierenden verfeinerten Glasschmelze und gleichzeitig Formen derselben in die für das beabsichtige Erzeugnis gewünschte Form, und
    - Anwenden einer keramisierenden Wärmebehandlung auf das geformte Glas,

    wobei das Verfahren **dadurch gekennzeichnet ist, dass** die Ladung eine Zusammensetzung aufweist, die es ermöglicht, eine Glaskeramik mit der in einem der Ansprüche 1 bis 8 dargelegten Gewichtszusammensetzung zu erlangen.

14. Verfahren nach Anspruch 13, **dadurch gekennzeichnet, dass** die verglasbare Ladung von Rohmaterialien, die frei von $As_2O_3$ und von $Sb_2O_3$ mit Ausnahme von unvermeidbaren Spuren ist, $SnO_2$ als Läuterungsmittel, vorteilhafterweise 0,05 % bis 0,6 % $SnO_2$, enthält.

**Revendications**

1.  Vitrocéramique transparente, du type alumino silicate de lithium (LAS), contenant une solution solide de quartz-$\beta$ comme phase cristalline principale, dont la composition, exprimée en pourcentages en masse d'oxydes, renferme :

    63 à 67,5 % de $SiO_2$,
    18 à 21 % d'$Al_2O_3$,
    2 à 2,9 % de $Li_2O$,
    0 à 1,5 % de MgO,
    1 à 3,2 % de ZnO,
    0 à 4 % de BaO,
    0 à 4 % de SrO,
    0 à 2 % de CaO,
    2 à 5 % de $TiO_2$,
    0 à 3 % de $ZrO_2$,
    0 à 1 % de $Na_2O$,
    0 à 1 % de $K_2O$,
    0 à 5 % de $P_2O_5$,

    avec (0,74 MgO + 0,19 BaO + 0,29 SrO + 0,53 CaO + 0,48 $Na_2O$ + 0,32 $K_2O$) / $Li_2O$ < 0,9,

éventuellement jusqu'à 2 % d'au moins un agent d'affinage, et
éventuellement jusqu'à 2 % d'au moins un colorant.

**2.** Vitrocéramique selon la revendication 1, dont la composition comprend une teneur en $Li_2O$, inférieure ou égale à 2,85 %, ou supérieure ou égale à 2,20 %, très avantageusement de 2,20 à 2,85 %.

**3.** Vitrocéramique selon la revendication 1 ou 2, dont la composition comprend de 1 à 3 % de ZnO.

**4.** Vitrocéramique selon l'une quelconque des revendications 1 à 3, dont la composition conprend au moins 0,5 % de $P_2O_5$, avantageusement de 1 à 3 % de $P_2O_5$.

**5.** Vitrocéramique selon l'une quelconque des revendications 1 à 3, dont la composition ne contient pas, à l'exception de traces inévitables, de $P_2O_5$ et comprend de 1 à 2,5 % de ZnO.

**6.** Vitrocéramique selon l'une quelconque des revendications 1 à 5, dont la composition ne comprend pas, à l'exception de traces inévitables, de $B_2O_3$.

**7.** Vitrocéramique selon l'une quelconque des revendications 1 à 6, dont la composition, exempte à l'exception de traces inévitables d'$As_2O_3$ et de $Sb_2O_3$, comprend $SnO_2$ comme agent d'affinage, avantageusement de 0,05 à 0,6 % de $SnO_2$, très avantageusement de 0,15 à 0,4 % de $SnO_2$.

**8.** Vitrocéramique selon l'une quelconque des revendications 1 à 7, dont la composition contient $V_2O_5$ à titre de colorant, seul ou en mélange avec au moins un autre colorant choisi parmi CoO, $Cr_2O_3$ et $Fe_2O_3$.

**9.** Vitrocéramique selon l'une quelconque des revendications 1 à 8, présentant un coefficient de dilatation thermique compris entre $\pm\ 14\times10^{-7}K^{-1}$, entre 25 et 450°C, et aussi, avantageusement, un coefficient de dilatation thermique compris entre $\pm\ 14\times10^{-7}K^{-1}$, entre 25 et 700°C.

**10.** Article constitué, au moins en partie, d'une vitrocéramique selon l'une quelconque des revendications 1 à 9, consistant notamment en une plaque de cuisson.

**11.** Verre d'aluminosilicate de lithium, précurseur d'une vitrocéramique selon l'une quelconque des revendications 1 à 9, dont la composition permet d'obtenir une vitrocéramique selon l'une quelconque des revendications 1 à 9.

**12.** Verre selon la revendication 11, présentant une température au liquidus inférieure à 1400°C et une viscosité au liquidus de plus de 400 Pa.s ;

et/ou, avantageusement et,
une viscosité de 30 Pa.s à une température d'au maximum 1640°C ($T_{30Pa.s} \leq 1640°C$).

**13.** Procédé d'élaboration d'un article selon la revendication 10, comprenant successivement :

- la fusion d'une charge de matières premières vitrifiable, suivie de l'affinage du verre fondu obtenu ;
- le refroidissement du verre fondu affiné obtenu et, simultanément, sa mise en forme à la forme désirée pour l'article visé ; et
- un traitement thermique de céramisation dudit verre mis en forme ; **caractérisé en ce que** ladite charge a une composition qui permet d'obtenir une vitrocéramique présentant la composition massique énoncée dans l'une quelconque des revendications 1 à 8.

**14.** Procédé selon la revendication 13, **caractérisé en ce que** ladite charge de matières premières vitrifiable, exempte à l'exception de traces inévitables d'$As_2O_3$ et de $Sb_2O_3$, contient $SnO_2$ comme agent d'affinage, avantageusement de 0,05 à 0,6 % de $SnO_2$.

## REFERENCES CITED IN THE DESCRIPTION

**Patent documents cited in the description**

- US 5070045 A
- WO 2012156444 A
- US 6846760 B
- US 8053381 B
- US 9051209 B
- US 9051210 B
- US 2013164509 A1
- US 9446982 B
- US 20150197444 A
- US 9018113 B
- DE 102018110855